# EUROPEAN PATENT SPECIFICATION

(11) **EP 0 386 909 B1**
(45) Date of publication and mention of the grant of the patent: **10.01.1996**
(21) Application number: 90301964.4
(22) Date of filing: 23.02.1990
(51) Int. Cl.: C09J 4/06

(54) **Epoxy-acrylate blend pressure-sensitive thermosetting adhesives**
Druckempfindliche, thermohärtende Klebstoffe aus einer Epoxid-acrylester-Mischung
Adhésifs thermodurcissables, sensibles à la pression, mélange d'époxy-acrylate

(30) Priority: 09.03.1989 US 321571
(43) Date of publication of application: 12.09.1990
(73) Proprietor: MINNESOTA MINING AND MANUFACTURING COMPANY, St. Paul, Minnesota 55133-3427 (US)
(72) Inventor: Sato, Shinobu, c/o Minnesota Mining and, P.O. Box 33427, St. Paul Minnesota 55133 (US); Kitano, Shuichi, c/o Minnesota Mining and, P.O. Box 33427, St. Paul Minnesota 55133 (US)
(74) Representative: Baillie, Iain Cameron

(56) References cited:
- EP-A- 0 012 542
- EP-A- 0 150 674
- EP-A- 0 359 373
- DATA BASE WPIL, accession nr. 82-92373E (43) Derwent Publications Ltd, London, GB

## Description

### Field of the Invention

This application relates to pressure-sensitive thermosetting adhesives comprising a blend of acrylic esters and epoxy resins.

### Description of the Related Art

In the assembly of automotive components, e.g., automobile trim, a premade component may be bonded to the body by means of a high performance adhesive. Similarly, adjacent structural members may be sealed at their juncture by means of such an adhesive. Useful adhesives must be conformable to the bonding surfaces, must be initially tacky, and must adhere to such substrates as electron-deposited (E-D) paint surfaces and oily metal.

Further, as the material may be applied to the structural member prior to heating in a paint curing oven, it must demonstrate high temperature resistance and high adhesiveness. Ideally the adhesive would be initially pressure-sensitive and would cure upon exposure to temperatures normal to paint curing oven, permanently bonding the component to the structural member, or sealing a seam between adjacent structural members, yet remaining flexible.

High-performance adhesives are known for bonding of structural members and sealing of seams therebetween. One such adhesive is disclosed in U.S. 3,312,754, (Marks), which describes a liquid elastic adhesive for sealing the seams of metal containers. The mixture comprises 55 to 86 parts by weight of a glycidyl ether of a polyhydric compound, 14 to 45 parts by weight of butadiene-acrylonitrile-carboxyl terpolymer, wherein the carboxyl groups will react with a portion of the epoxy groups in the epoxy resin, and a "flexibilizing copolymer" for reacting with the unreacted epoxy groups. This copolymer is selected from butadiene-(meth)acrylic acid, carboxylated copolymers of butadiene-styrene, and carboxylate copolymers of butadiene-acrylonitrile. This compositions is said to be "pumpable", to have high adhesive to metal surfaces, to withstand temperatures of up to 180°C without curing, and to cure at 375°C.

U.S. 4,447,579, (Tagaki et al.) discloses a room temperature curable epoxy resin adhesive with high adhesion to metals. Like Marks, the compositions consists of an epoxy resin and a synthetic rubber having terminal carboxyl groups. The mixture is crosslinked by a polyamine. These compositions are both liquid, and are therefore, difficult to handle, and must be applied to the structural member at the time of bonding.

U.S. 3,406,087, (Potter) discloses an expansion joint which consists of a synthetic rubber, typically polyisobutylene, polychloroprene or polyisoprene, which is partially vulcanized by the addition of sulfur. This is then coated with a bisphenol-A epoxy resin adhesive prior to bonding. This material is disclosed to require several months to cure at ambient temperatures.

A similar example of a rubber-based thermosetting composition is provided by U.S. 3,340,224 (Sherman). The composition is a blend of a comminuted synthetic rubber of the acrylonitrile type, and an epoxy resin, using N,N-diallylmelamine as a crosslinking agent. The product, used in a partially cured form, is a solid but is, unfortunately, substantially tack-free. When used in bonding or sealing applications, the material must be heated to temperatures in the range of 250 to 320°F. to effect wetting of the substrates to be joined or sealed and to form the cohesive bond.

U.S. 4,199,646 (Hori et al.) discloses a heat-activatable pressure-sensitive adhesive that may be conventionally coated on a backing material, or may be coated on a release liner having, e.g., a coating of silicone with a low degree of adhesivity. The latter tape, commonly called an adhesive transfer tape, is useful if the adhesive is to be interposed between two objects. This material comprises 100 parts of a copolymer of an acrylic ester of which the alkyl portion has between one and ten carbon atoms, and a polymerizable prepolymer having a functional group which may be a carboxyl, a hydroxyalkyl, a glycidyl or a methylol. This acrylic copolymer is then blended with preferably 70 to 150 parts of a hot melt resin, which may be an epoxy, phenolic or xylene, among others. If less than 50 parts of the hot melt resin are used, the shear strength is disclosed to be insufficiently high and the adhesive must be kept stationery under pressure. If, on the other hand, the quantity of hot melt exceeds 200 parts, the adhesive will not wet the adherend, rendering the peel strength will be too low. The material as described has "a low stickiness to the touch" and must be heated to at least 60°C to adhere. Furthermore, since the material is solution coated onto a liner, thick films of the adhesive are not possible.

U.S. 4,503,200 (Corley) employs an epoxy resin, acrylated polyols such as trimethylolpropane triacrylate, a polycarboxyl curing agent, preferably trimellitic anhydride and an "onium" curing accelerator, described as essential to increasing the heat deflection temperature. Because the uncured viscosity of the material is low, an applicator is required to apply the adhesive to a substrate, which must be clamped or held in place until the material is cured.

Acrylate pressure-sensitive adhesives are also well known in the art. In U.S. Patent No. Re 24,906 (Ulrich), alkyl acrylate copolymers are described which are predominately alkyl esters of acrylic acid having from 4 to 14 carbon atoms, and further comprise a minor amount (3-12%, preferably 4-8%) of a polar copolymerizable monomer such as acrylic acid. Such adhesives are widely popular as they are readily available and provide a good balance of tack, shear and peel properties on a variety of substrates at a relatively low cost. These adhesives have been used for various automotive applications, e.g., attachment of decorative items to the painted surface.

U.S. Patent No. 4,181,752 (Martens et al.) discloses a process for ultraviolet photopolymerization of alkyl acrylate esters and polar copolymerizable monomers to form the acrylate copolymer. Martens teaches that intensity and spectral distribution of the irradiation must be controlled in order to attain desirable cohesive strengths and peel resistance. The photopolymerization is preferably carried out in an inert atmosphere as oxygen tends to inhibit the reaction. Adhesive properties for tapes made via the Martens process are improved over those made by solution polymerization in balance of adhesive properties.

Additional patents disclose ultraviolet radiation of acrylate adhesives. U.S. Patent No. 4,364,972 (Moon) discloses the use of N-vinylpyrrolidone as the polar copolymerizable monomer in the acrylate adhesive copolymer. High adhesion to automotive paints is disclosed but not exemplified. U.S. Patents No. 4,391,687, 4,329,384 and 4,330,590 (Vesley) disclose the use of specific chromophore-substituted-halomethyl-s-triazines as photoactive crosslinkers for acrylate copolymers.

Various polymers have been added as modifiers to acrylate adhesives. In U.S. Patent No. 4,243,500 (Glennon), a pressure-sensitive adhesive is disclosed comprising at least one monofunctional unsaturated acrylate ester monomer, saturated tackifying resin polymers, non-crystallizing elastomeric material, and an initiator responsive to ultraviolet light or other penetrating radiation. Glennon specifies the use of UV light within a wavelength range of 1800-4000 Angstroms.

U.S. Patent Nos. 4,552,604, 4,092,443 and 4,252,593 (Green) each disclose using a blend of an epoxy resin and acrylic ester. In the case of U.S. 4,552,604, it may be applied to a conventional or a strippable backing for use in bonding two surfaces. The resin blend is applied and then photopolymerized by exposure to actinic radiation to form a continuous adhesive film. The adhesive may then be transferred to the substrate and subsequently, thermoset. This adhesive likewise requires external pressure or clamping due to the poor internal strength of the uncured adhesive.

U.S. 4,612,209 (Forgo) describes an adhesive transfer tape for bonding a variety of substrates, including oily metal. The mixtures comprises a blend of 2 to 24% of an acrylic ester prepolymer, preferably a diol diacrylate and 20 to 90% of an epoxy resin. The blend is coated on a release liner and photopolymerized by exposure to actinic radiation to yield a pressure-sensitive adhesive that may be further heat cured. The composition as described may show high ultimate dynamic shear strength, but has poor initial adhesive and handling properties, i.e., it would also require external means of adhesion prior to epoxy cure.

EP-A-0 012 542 describes a method of making a resin adhesive coated substrate comprising a specific sheet material and a narrowly tailored heat reactive adhesive resin.

Despite the interest in a pressure-sensitive structural adhesive that can be used for the bonding or seaming of metals, none has been yet seen commercially which yields the convenience of quick stick, and the high ultimate bond strength desirable.

It is an object of this invention to provide a pressure-sensitive adhesive that can be used as a convenient and high performance adhesive. It is a further object of the invention to provide a pressure-sensitive adhesive that provides good quick stick without requirement for external adhesion means.

It is a further object of the invention to describe an adhesive composition in the form of an adhesive transfer tape that is conformable to irregular surfaces. A still further object of the invention is to describe an adhesive composition that has excellent adhesion to metal surfaces, and to E-D painted surfaces.

### Summary of the Invention

The present invention provides an acrylic ester/ epoxy resin pressure-sensitive thermosetting adhesive, for use in structural bonding of components to metal surfaces or for then sealing of metal seams. Adhesives of the invention offer excellent adhesion to metal and painted surfaces, including oily metal surfaces, as well as high shear and peel strengths and excellent storage properties.

In one preferred embodiment, the adhesive of the invention is a foam or foam-like adhesive.

The present invention also provides transfer tapes comprising at least one layer of such pressure-sensitive thermosetting adhesive on a carrier web.

The acrylic ester/epoxy resin pressure-sensitive thermosetting adhesive of the present invention is an initially tacky and conformable thermosetting adhesive which is obtained by photopolymerizaticn of a blend comprising:
(a) from at least 30% by weight of a photopolymerizable monomer syrup of a mixture of monomers, optionally with a thixotropic agent or a prepolymer of said monomers which monomers comprise:
   (i) from 50 to 95 parts of an alkyl acrylate monomer, the alkyl groups of which have an average of 4 to 12 carbon atoms, and
   (ii) correspondingly, from 50 to 5 parts of a monoethylenically unsaturated, moderately polar copolymerizable monomer;
(b) from 20% to 60% by weight of an epoxy resin or a mixture of epoxy resins containing no photopolymerizable groups,
(c) from 0.5% to 10% by weight of a heat-activatable hardener for the epoxy resin,
(d) from 0.01% to 5% of a photoinitiator, and
(e) from 0 to 5% of a photocrosslinking agent.

All ratios, parts, and percents herein are by weight unless specifically otherwise identified.

These terms have the following meanings as used herein.
1. The term "thermosetting" means the the adhesive may be cured to a final state of hardness by the use of heat.
2. The terms "cure", "cured", "uncured", and the like, relate to the thermoset status of the epoxy resin, and are not used to refer to the photopolymerization or the crosslinking of the acrylic polymer portion of the novel composition.

Detailed Description of the Invention The photopolymerizable prepolymer comprises an acrylic ester and a moderately polar comonomer. The acrylic ester is a monofunctional acrylic ester of a non-tertiary alcohol, having from 4 to 12 carbon atoms in the alcohol moiety. Included in this class of acrylic esters are butyl acrylate, hexyl acrylate, 2-ethylhexyl acrylate, octyl acrylate, isooctyl acrylate, decyl acrylate and dodecyl acrylate. The alkyl acrylate comprises from 50 to 95 parts of the prepolymer resin blend, and preferably from 55 to 80 parts.

The copolymerizable monomers are selected from the group of nitrogen containing, moderately polar unsaturated monomers such as N-vinyl pyrrolidone, N-vinyl caprolactam, N-vinyl piperidine and acrylonitrile. The moderately polar comonomer comprises from 50 to 5 parts of the prepolymer resin blend, and preferably from 45 to 20 parts.

The acrylic copolymers useful as pressure-sensitive adhesives are very stable compositions. Because of their unique stability, the novel pressure-sensitive thermosetting adhesives of the invention may be subjected to the heat conditions required for curing the epoxy resin without degradation of the pressure-sensitive adhesive portion of the composition. Other types of pressure-sensitive adhesives would begin to flow and experience a partial or total loss of adhesion, causing detachment of the structural parts prior to the conditions required, i.e., length and elevation of temperature, for thermoset ting of the epoxy resin.

Further, both the photopolymerizable acrylic prepolymer, and the photopolymerized polymer are compatible with the epoxy resin. Many monomeric mixtures would react with the epoxy resin to form a nonadhesive composition. The presence of the uncured epoxy resin would degrade many polymerized adhesive compositions even prior to heating.

Useful epoxy resins may be selected from the group of compounds that contain at least two epoxy groups per molecule. The epoxy resin must be either liquid or a semi-liquid at room temperature for handling purposes, although a mixture of a liquid and solid resin may be employed if the resulting mixture is liquid. Representative examples include phenolic epoxy resins, bisphenol epoxy resins, and halogenated bisphenol epoxy resins.

Preferred epoxy resins include bisphenol epoxies with the most preferred epoxy resin being the diglycidyl ether of a bisphenol-A, formed by reaction of bisphenol-A with epichlorohydrin, and having an epoxy equivalent weight of 170 to 210.

The epoxy resin content should be less than 120 parts (when the acrylic ester content is 100 parts, hereinafter called phr) and preferably from 25 to 40 phr. If more than 120 phr epoxy resin is used, adhesives show good ultimate shear strength, but the initial handling and adhesion properties are poor e.g., quick stick, wet grab are low.

A hardener is added to effect the curing of the epoxy resin under application of heat. The hardener may be any type, but preferably an amine type hardener that is selected from the set comprising imidazole type, dicyandiamide or polyamine salts. These are available from a variety of sources, e.g., Omicure™ available from Omicron Chemical, and Ajicure™ available from Ajinomoto Chemical.

Because there are many points in an automotive painting cycle at which the adhesive may be used, the heat to which the adhesive is exposed may be insufficient to fully cure the epoxy resin. In these cases, it may be advantageous to add an accelerator to the prepolymer blend, so the resin may fully cure at a lower temperature, or may fully cure when exposed to heat for shorter periods. It has been found that either urea or imidoyl derivatives are useful cure accelerators, especially preferred is Monuron™, a urea derivative available from Aceto Chemical Company.

In the present invention the prepolymer, or monomeric syrup, of the resin blend comprising items 1-5 supra is initially photopolymerized to produce an thermosettable adhesive of coatable viscosity. The photoinitiator used for this purpose may be of the photoinitiator or the photosensitizer type. The preferred photo initiator is Irgacure™ 651 (IRG), available from Ciba-Geigy, having the formula 2,2-dimethoxy-1,2-diphenylethane-1-one.

A photocrosslinking agent may also be added to the photopolymerizable mixture depending on the end result required. The use of such an agent will strongly crosslink the acrylic ester copolymer producing a very heat stable thermosetting adhesive which will not flow in a high temperature curing process, and will improve the initial strength (uncured strength) as well as the handling properties. When used as a sealant for metal seams, a flow of the adhesive in a high temperature curing process may be desired, so that the adhesive will flow into and completely seal a seam between two or more metal panels or E-D painted panels; in this instance, the use of a crosslinking agent may be omitted. Thermal-type crosslinking agents are not suitable since the adhesives would continue to crosslink when exposed to heat, leading to bitterness of the adhesive.

The preferred crosslinking agents are multifunctional acrylates such as 1,6-hexanediol diacrylate as well as those taught in U.S. 4,379,201 (Heilmann et al.), incorporated herein by reference. Other types of crosslinking agents are also useful, e.g., any of the triazine crosslinking agents taught in U.S. Patents 4,330,590 (Vesley), and 4,329,384 (Vesley et al.), both of which are incorporated by reference. When present, the crosslinking agent comprises less than 5 phr.

For best results in the bonding or seaming of metal, a thicker, foam-like pressure-sensitive transfer tape is preferred. The thickness should be more than 0.1 mm and is preferably more than 0.3 mm. Optionally, glass or polymeric hollow microbubbles are added to the photopolymerizable syrup prior to polymerization. The microspheres should have an average diameter of 10 to 200 micrometers, and comprise from 5 to 65 volume percent of the foam-like layer. The thickness of the foam-like layer in preferred tapes of the invention range from 0.3 mm to 4.0 mm in thickness.

Preferred glass microspheres have average diameters of 50 micrometers. When glass microspheres are used, the foam-like pressure-sensitive adhesive layer should be at least 3 times as thick as their diameter, preferably at least 7 times.

Useful glass microspheres include transparent microspheres such as those claimed in U.S. Patents 3,315,615, (Beck et al.), and 3,391,646, (Howell), and colored microspheres such as those disclosed in U.S. Pat. Nos. 4,612,242, (Vesley et al.), 4,618,242, (Chamberlain et al.) and 4,666,771, (Vesley et al.), all of which are incorporated herein by reference.

Especially preferred microspheres are polymeric microspheres, such as those described in U.S. Patent Nos. 3,615,972, (Morehouse et al.), 4,075,138, (Garner), and 4,287,308, (Nakayama et al.), all of which are incorporated herein by reference. The microspheres are available from Kema Nord Plastics under the trade name "Expancel" and from Matsumoto Yushi Seiyaku under the trade names "Micropearl" and F-80-ED. In expanded form, the microspheres have a specific density of approximately 0.02-0.036 g/cc. The hollow microspheres are substantially surrounded by at least a thin layer of adhesive.

The use of the polymeric microbubbles in the present invention reduce the amount of monomeric syrup to be employed without sacrificing performance. Furthermore, it has been found that when polymeric microbubbles are employed, the resultant adhesive has very good conformability to irregular surfaces.

Other useful materials which can be blended into the removable pressure-sensitive adhesive layer include, but are not limited to, fillers, pigments, fibers, woven and nonwoven fabrics, foaming agents, antioxidants, stabilizers, fire retardants, chain transfer agents, and viscosity adjusting agents.

An especially useful filler material is hydrophobic silica as disclosed in U.S. Patents No. 4,710,536 and 4,749,590, (Klingen et al.). In one preferred embodiment of the present invention, the removable pressure-sensitive adhesive layer further comprises from 2 to 15 phr of a hydrophobic silica having a surface area of at least 10 m/g.

Another preferred additive is an encapsulated hardener, e.g., HX 938 available from Ciba. The use of such a hardener results in an improved storage ability for tapes of the invention.

The mixture is preferably coated onto a silicone release liner which is transparent to ultraviolet radiation. This may be photopolymerized under an inert atmosphere, but is preferably achieved using a second release liner and photopolymerizing through the transparent film. This process of coating with a solventless syrup of the monomers followed by polymerization allows one to form thicker coatings of the adhesive than by solvent coating techniques and avoids the problems of toxicity and flammability associated with the solvents.

The compositions of the invention are preferably prepared by premixing together the photopolymerizable monomers and the photoinitiator. This premix is then partially polymerized to a viscosity in the range of from about 500 cps to about 5,000 cps to achieve a coatable syrup. Alternatively, the monomers may be mixed with a thixotropic agent such as fumed hydrophilic silica to achieve a coatable thickness. The crosslinking agent(s) and any other ingredients are added to the syrup prior to in situ crosslinking and polymerization.

This composition is coated onto a flexible carrier web, preferably a silicone release liner which is transparent to ultraviolet radiation, and polymerized in an inert, i.e., oxygen free, atmosphere, e.g., a nitrogen atmosphere. A sufficiently inert atmosphere can be achieved by covering a layer of the photoactive coating with a plastic film which is substantially transparent to ultraviolet radiation, and irradiating through that film in air as described in U.S. Pat. No. 4,181,752, (Martens et al.). If, instead of covering the polymerizable coating, the photopolymerization is to be carried out in an inert atmosphere, the permissible oxygen content of the inert atmosphere can be increased by mixing into the polymerizable monomer an oxidizable tin compound as taught in U.S. Patent No. 4,303,485 (Levens), which also teaches that such procedures will allow thick coatings to be polymerized in air.

Where multilayer tape constructions are desirable, a preferred method of construction is multilayer coating, as described in U.S.S.N. 84,781, (Zimmerman et al.), published as U.S. Patent No. 4,818,610, wherein a plurality of copolymerizable coatable compositions is prepared, each composition containing at least one photopolymerizable monomer, one of the coatable composition being the novel pressure-sensitive adhesive of the invention. The coatable compositions are coated to provide a plurality of superimposed layers with contiguous layers defining an interface therebetween, with the novel pressure-sensitive adhesive terpolymer of the invention being coated as a first or last layer. Migration of photopolymerizable monomers through the interface between contiguous layers is permitted, and the superimposed layers are then simultaneously irradiated. This provides polymeric chains comprised of copolymers of photopolymerizable monomers originating from contiguous layers extending through the interface therebetween, thereby producing a tape having layers which cannot be delaminated.

The pressure-sensitive foam-like tapes thus obtained were subjected to the following tests, both before and after thermosetting in order to evaluate the performance as either a seam sealing or structural bonding adhesive.

### Test Methods

### Aluminum T-peel

A foam tape sample is placed between two strips of 13.5mm x 200mm x 0.125mm anodized aluminum, leaving an adhesive free 25mm tab at each end of each aluminum strip. The assembly is rolled down with a 6.8 Kg roller, one pass in each direction, and the samples then conditioned for 1 to 2 hours at room temperature. The tabs are bent back at 90° in opposite directions and respectively clamped in the upper and lower jaws of a tensile testing machine. The jaws are separated at a rate of 300mm/minute, noting both the average force required to effect separation as well as the maximum force at adhesive failure.

### E-D Paint Panel Dynamic Shear Strength

A 25 mm x 25 mm sample of the adhesive was adhered between two E-D painted steel panels (25 mm x 75 mm x 0.8 mm), and rolled down with a 5 Kg roller. The two plates were connected to the jaws of an Instron apparatus and the jaws separated at 180° coplanar with the E-D paint panels, at a rate of 50 mm/minute. The force at adhesive failure was recorded.

### Foam Strength and Foam Elongation

A dumbbell-cut sample (according to ASTM D-412) of the adhesive was connected to the jaws of an Instron and the jaws separated at a rate of 51 cm per minute. The force at foam break and the % elongation at break were recorded. This test was performed on both the cured and uncured tape samples as indicated.

### Ethyl Acetate Solubility Test

It has been found in the present invention that the solubility behavior of the adhesive transfer tapes provides a useful indicator of the performance when used as a seam sealer. In this test a 0.2 gram sample and 15 ml of ethyl acetate were shaken together for three hours and the solubility or lack thereof was noted. Those compositions having good solubility were found to melt and flow well under the application of heat, and conversely those having marginal or poor solubility in ethyl acetate showed only moderate or poor flow.

### Oily Metal

Two 75 mm x 25 mm x 0.8 mm flexible stainless steel panels were dipped into antirust oil, and then suspended for 24 hours to drain the excess oil. An end of one of the metal strips was coated with a 25 mm x 25 mm sample of the adhesive, then covered with an end of the second metal strip, so that the two metal strips overlapped. The adhesive was secured to the metal strips by pressing with a 1.5 kg weight for 5 seconds. The free ends were secured to an Instron™, and the jaws separated at a rate of 4.7 cm/min (12 in/min) for the uncured samples, and at a rate of 1.96 mm/min (.5 in/min) for the cured samples.

### Examples

The following examples are for illustrative purposes only, and are not to be considered limiting in any way. The scope of the invention is that which is defined in the claims.

### Glossary

### Chemicals

DGEBA-diglycidyl ether of bisphenol-A
IRGACURE-Irgacure 651
HDDA-1,6-hexanediol diacrylate
DICY-Dicyandiamide
IOA-Isooctyl acrylate
NVP-N-vinyl pyrrolidone
AA-Acrylic Acid

### Tests

ELONG-elongation
FS-Foam strength
ED-DS-electrodeposited dynamic shear

### Examples

It has been found in the present invention that the solubility behavior of the adhesive transfer tapes provided a useful indicator of the performance when used as a seam sealer. Those compositions which had good solubility were found to melt and flow well under the application of heat, and conversely those having marginal or poor solubility in ethyl acetate showed only moderate or poor flow. In this test a 0.2 gram sample and 15 ml of ethyl acetate were shaken together for two hours and the solubility noted. The following examples will further illustrate the invention, but are not to be construed as limiting the invention.

### Example 1

100 parts by weight of isooctyl acrylate/ N-vinyl pyrrolidone (IOA/NVP), with a monomer ratio 71/29, was blended with .04 parts of Irgacure, and photopolymerized with an ultraviolet (UV) light source under constant nitrogen purge to viscosity of nearly 2000 cps. To the IOA/NVP prepolymer, and with continuous mixing, was added an additional .1 parts of Irgacure, 50 parts of the diglycidyl ether of bisphenol-A (DGEBA), 5 parts of a dicyandiamide (DICY) hardener and 2.5 parts of Monuron™, a p-chlorophenyl-dimethyl urea accelerator available from Aceto Chemical Company. After mixing for two hours with a laboratory mixer, the blend was degassed and then knife-coated on a transparent polyester liner, having a silicone release coating, to a thickness of 46 to 48 mils, then covered by a second transparent liner also having a silicone release coating. The coated mixture was photopolymerized using a UV light source. The intensity of the UV was 1.76 mw/cm on the top side and 1.65 mw/cm on the bottom side of the tape. The total UV energy was 450 mw/cm. The pressure-sensitive transfer tape thus obtained was measured for T-peel, dynamic shear, foam strength and elongation as discussed above. The results are shown in Table 1-2 and 1-3.

### Examples 2-4, and 5C-8C

These examples were prepared as in Example 1. The proportion of the IOA relative to the NVP in the acrylate copolymer have been varied, additionally, Example 2 contains, Aerosil™ A-972, and Example 3 contains HDDA. The compositions are shown in Table 1-1 and the results of the tests shown in Tables 1-2 and 1-3.

**TABLE 1-1**

| **Examples** | **1** | **2** | **3** | **4** | **5C** | **6C** | **7C** | **8C** |
|---|---|---|---|---|---|---|---|---|
| IOA | 71 | 60 | 60 | 60 | 40 | 20 | 100 | 20 |
| NVP | 29 | 40 | 40 | 40 | 60 | 80 | | 80 |
| IRGACURE | .14 | .14 | .14 | .14 | .14 | .14 | .08 | .08 |
| HDDA | | | .2 | | | | | |
| EPON 828 | 50 | 50 | 50 | 50 | 50 | 50 | 20 | 50 |
| DICY | 5 | 5 | 5 | 5 | 5 | 5 | 2 | 5 |
| MONURON | 2.5 | 2.5 | 2.5 | 2.5 | 2.5 | 2.5 | 1 | 2.5 |
| MATSUMOTO | | .8 | | | | | | |
| AEROSIL | | 2.0 | | | | | | |

All amounts are in parts.

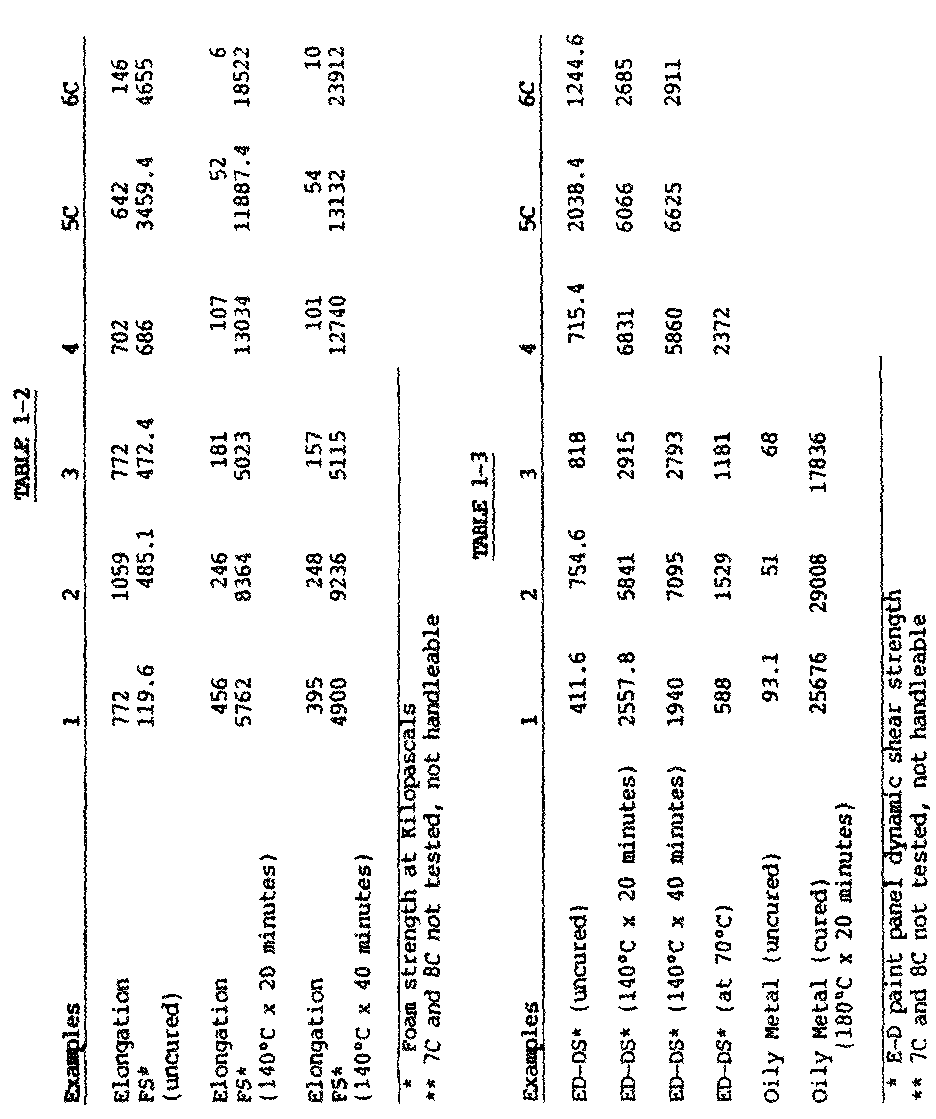

### Examples 9 To 16

Examples 9-16 were prepared as indicated in example 1, but the ratio of the acrylic copolymer to the epoxy was varied as indicated in Table 2-1. In examples 9-12, dicyandiamide was used as a hardener, while in examples 13C-16 fumaric acid was used. The results of the tests are shown in Table 2-2.

**TABLE 2-1**

| **Examples** | **9** | **10** | **11** | **12** | **13C** | **14** | **15** | **16** |
|---|---|---|---|---|---|---|---|---|
| IOA | 60 | 60 | 60 | 60 | 71 | 71 | 71 | 71 |
| NVP | 40 | 40 | 40 | 40 | 29 | 29 | 29 | 29 |
| IRGACURE | .14 | .14 | .14 | .14 | .1 | .1 | .1 | .1 |
| EPON 828 | 120 | 80 | 20 | 120 | 170 | 85 | 85 | 42.5 |
| OMICURE CG 1200 | 12 | 8 | 2 | 12 | | | | |
| MONURON | 6 | 4 | 1 | 6 | 2 | 1 | 1 | 0.5 |
| FUMARIC | | | | | 50 | 25 | 25 | 12.5 |
| AEROSIL | | | | 10 | 4.6 | 3.1 | 3.1 | 2.4 |
| MATSUMOTO 5-80-ED | | | | | | 1.48 | | 1.15 |

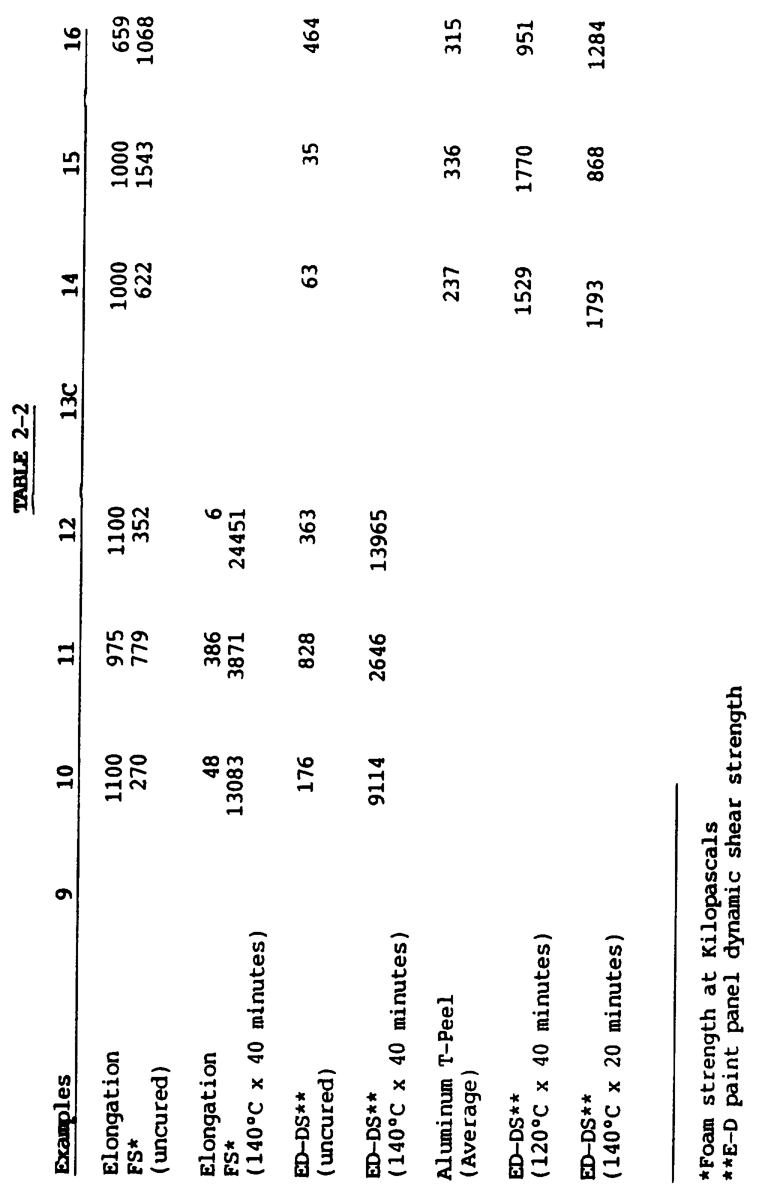

### Examples 17-19, 20C and 21C

These samples were prepared as in Example 1, substituting other acrylates for the IOA, or other moderately polar comonomers for the NVP. The compositions are shown in Table 3-1 and the results of the test shown in Table 3-2.

**TABLE 3-1**

| **Examples** | **17** | **18** | **19** | **20C** | **21C** |
|---|---|---|---|---|---|
| Butylacrylate | 80 | | 65 | | |
| IOA | | | | 87.5 | |
| Isononylacrylate | | 60 | | | |
| t-butylacrylate | | | | | 80 |
| NVP | 20 | 40 | | | 20 |
| AA | | | | 12.5 | |
| Hydroxyethylacrylate | | | 35 | | |
| HDDA | | | | | |
| IRGACURE | .14 | .14 | .14 | .14 | .14 |
| EPON 828 | 50 | 50 | 50 | 40 | 40 |
| OMICURE CT 1200 | 5 | 5 | 5 | 3 | 4 |
| MONURON | 2.5 | 2.5 | 2.5 | 1.5 | 2 |

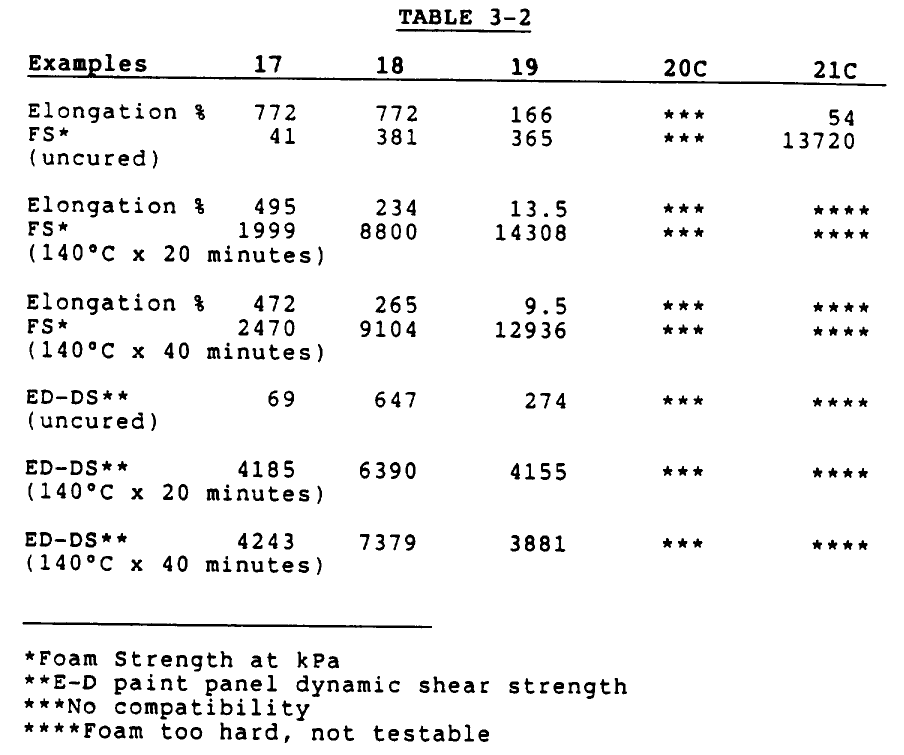

### Examples 22-30

These examples were prepared as in Example 1, holding the composition of the acrylate copolymer and the epoxy content constant, but varying the accelerator used. The compositions are shown in Table 4-1, and the results of the tests shown in Table 4-2 and 4-3.

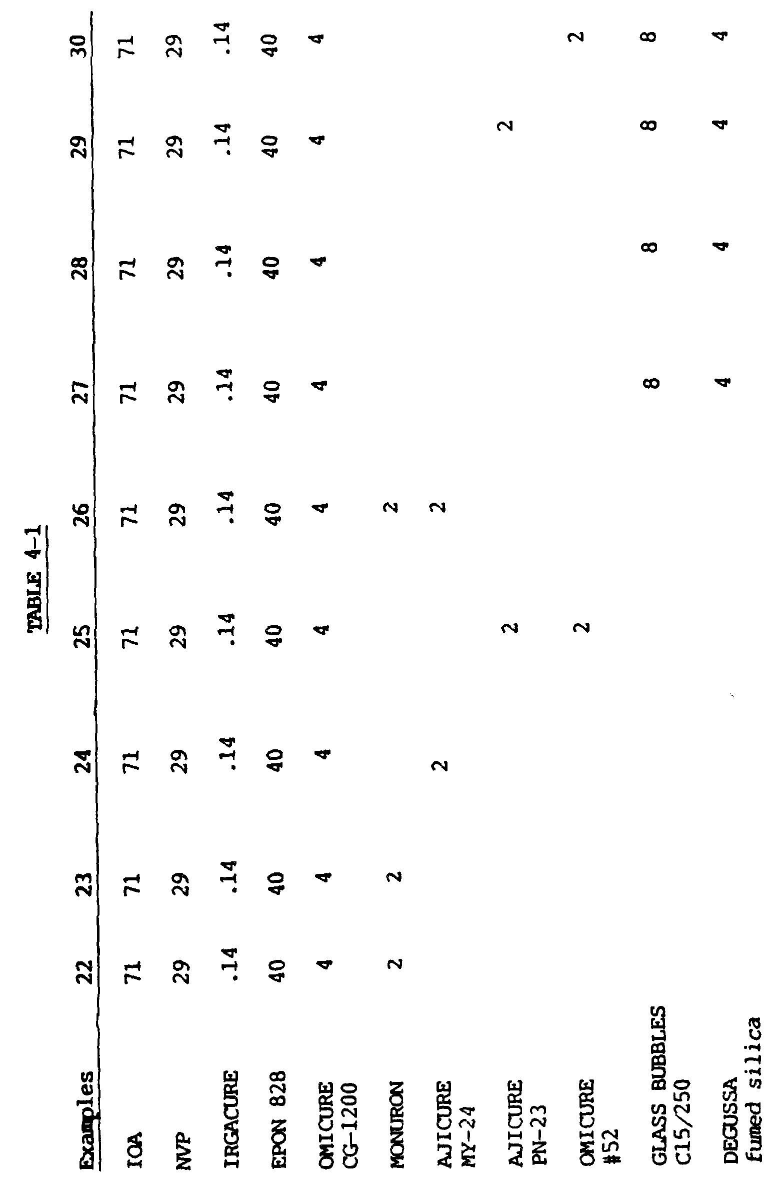

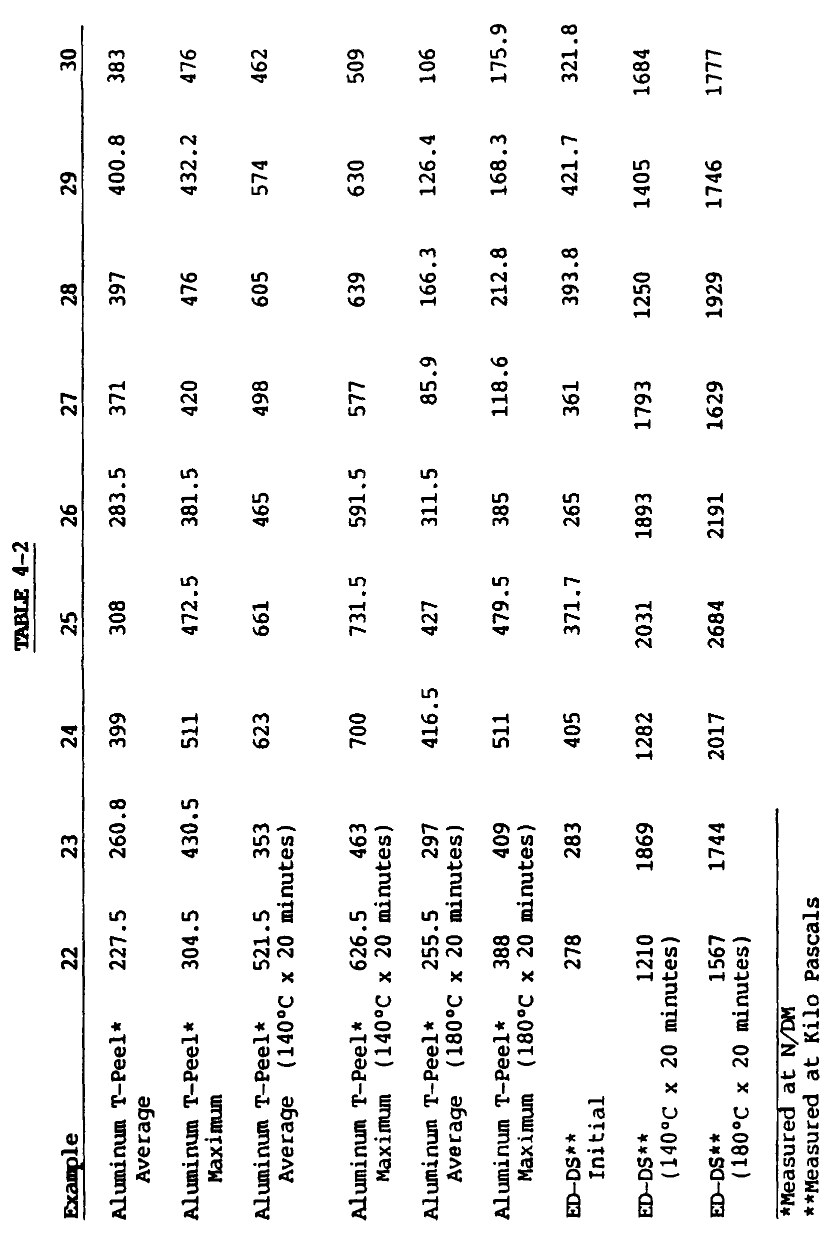

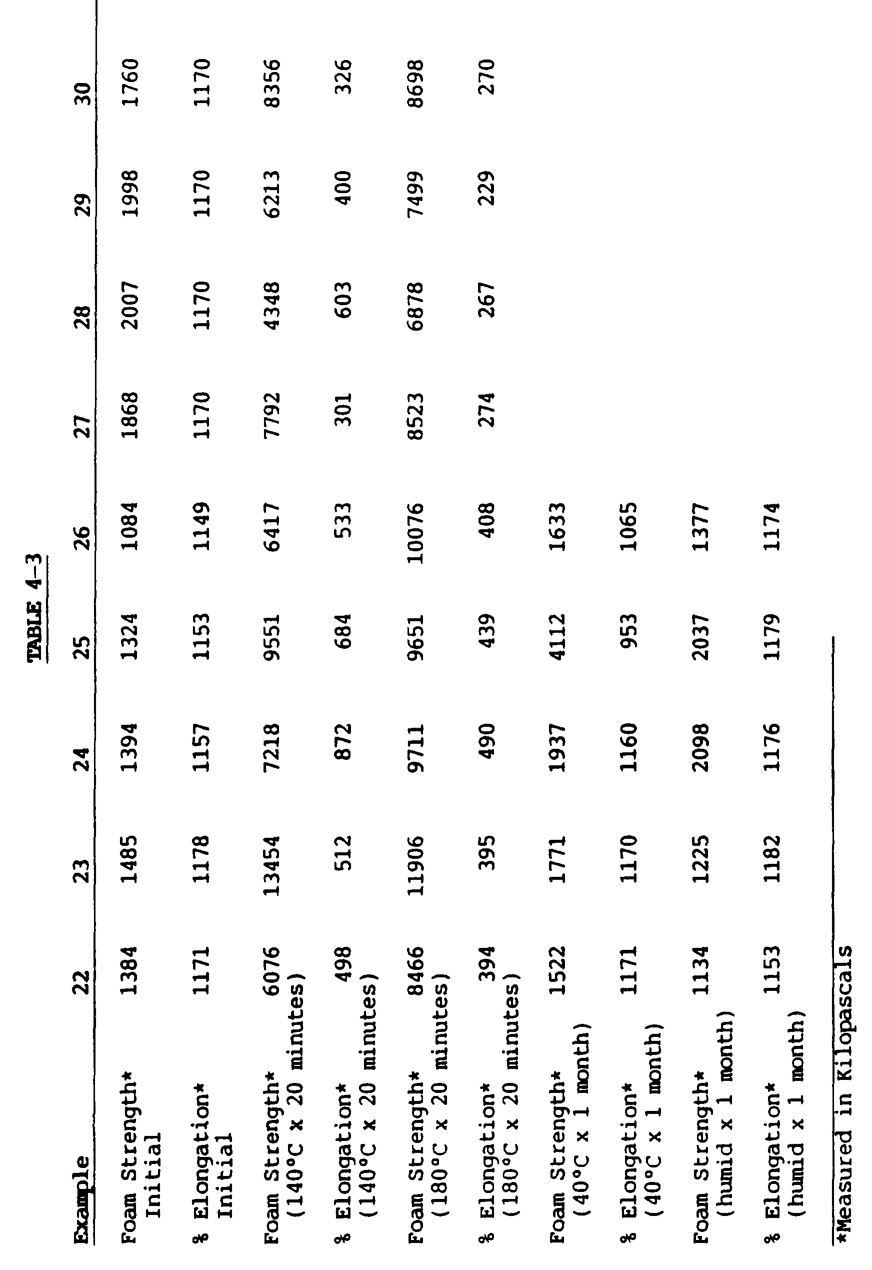

### Examples 31 To 40

These samples were again prepared as in Example 1, and the melting behavior and solubility as a function of the composition was determined. The compositions and results of the tests are shown in Table 5-1.

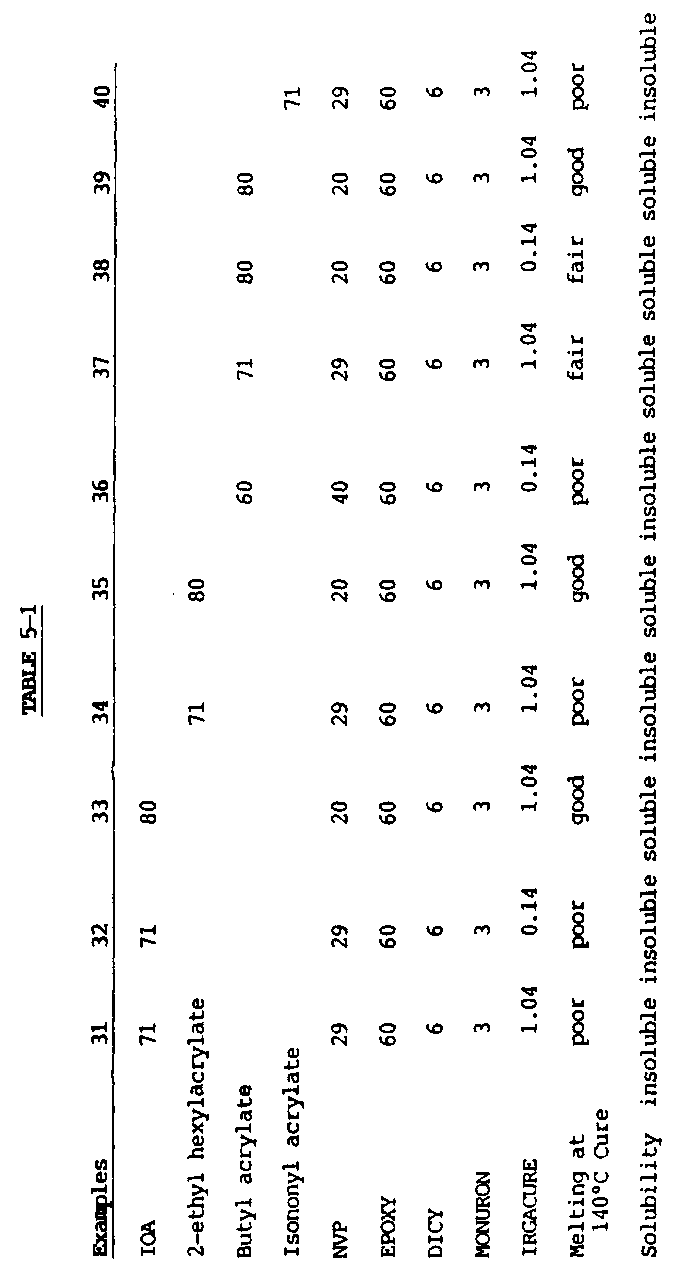

## Claims

1. A coatable, pressure-sensitive thermosetting adhesive comprising:
(a) from at least 30% by weight of a photopolymerizable monomer syrup of a mixture of monomers, optionally with a thixotropic agent or a prepolymer of said monomers which monomers comprise:
(i) from 50 to 95 parts of an alkyl acrylate monomer derived from a non-tertiary alcohol having a C-4 to C-12 alkyl group, and
(ii) correspondingly, from 50 to 5 parts of a nitrogen-containing, monoethylenically unsaturated, moderately polar copolymerizable monomer;
(b) from 20% to 60% by weight of an epoxy resin or a mixture of epoxy resins containing no photopolymerizable groups,
(c) from 0.5% to 10% by weight of a heat-activatable hardener for the epoxy resin,
(d) from 0.01% to 5% of a photoinitiator, and
(e) from 0 to 5% of a photocrosslinking agent.

2. The coatable pressure-sensitive thermosetting adhesive of claim 1, wherein the epoxy resin is selected from phenolic epoxy resins, bisphenol epoxy resins, and halogenated bisphenol epoxy resins.

3. The coatable pressure-sensitive thermosetting adhesive of any preceding claim wherein the epoxy resin is the diglycidyl ether of bisphenol A.

4. The coatable pressure-sensitive thermosetting adhesive of any preceding claim wherein the epoxy resin comprises from 25% to 40% of the adhesive.

5. The coatable pressure-sensitive thermosetting adhesive of any preceding claim wherein the monomer syrup comprises
(a) from 50 parts to 95 parts of an alkyl acrylate ester selected from isooctyl acrylate, isononyl acrylate, decyl acrylate, dodecyl acrylate, butyl acrylate, ethyl-hexyl acrylate and hexyl acrylate,
(b) correspondingly, from 50 parts to 5 parts of a monomethylenically unsaturated moderately polar copolymerizable monomer selected from N-vinylpyrrolidone, hydroxyethylacrylate and mixtures thereof.

6. The removable coatable pressure-sensitive adhesive of claim 5, wherein said acrylic copolymer comprises:
(a) from 60 parts to 80 parts isooctyl acrylate and
(b) correspondingly, from 40 parts to 20 parts N-vinylpyrrolidone.

7. The removable coatable pressure-sensitive adhesive of claim 5, wherein said acrylic copolymer comprises:
(a) from 60 parts to 85 parts butylacrylate and
(b) correspondingly, from 40 parts to 15 parts N-vinylpyrrolidone.

## Patentansprüche

1. Auftragsfähiger, warmhärtender Haftklebstoff, umfassend:
(a) mindestens 30 Gewichtsprozent eines photopolymerisierbaren Monomersirups einer Mischung von Monomeren, wahlweise mit einem Thixotropiermittel, oder einem Prepolymer dieser Monomere, welche Monomere umfassen:
(i) 50 ... 95 Teile eines Alkylacrylatmonomers, deriviert von einem nichttertiären Alkohol mit einer C₄ ... C₁₂-Alkylgruppe, und
(ii) dementsprechend 50 ... 5 Teile eines Stickstoff enthaltenden, monoethylenischen ungesättigten, mäßig polaren, copolymerisierbaren Monomers;
(b) 20 % ... 60 Gewichtsprozent eines Epoxyharzes oder einer Mischung von Epoxyharzen, die keine photopolymerisierbaren Gruppen enthalten,
(c) 0,5 % ... 10 Gewichtsprozent eines wärmeaktivierbaren Härters für das Epoxyharz,
(d) 0,01 % ... 5 % eines Photoinitiators und
(e) 0 ... 5 % eines Photovernetzungsmittels.

2. Auftragsfähiger, warmhärtender Haftklebstoff nach Anspruch 1, bei welchem das Epoxyharz ausgewählt wird aus phenolischen Epoxyharzen, Bisphenol-Epoxyharzen und halogenierten Bisphenol-Epoxyharzen.

3. Auftragsfähiger, warmhärtender Haftklebstoff nach einem der vorgenannten Ansprüche, bei welchem das Epoxyharz der Diglycidylether von Bisphenol A ist.

4. Auftragsfähiger, warmhärtender Haftklebstoff nach einem der vorgenannten Ansprüche, bei welchem das Epoxyharz 25 % ... 40 % des Klebstoffes ausmacht.

5. Auftragsfähiger, warmhärtender Haftklebstoff nach einem der vorgenannten Ansprüche, bei welchem der Monomersirup umfaßt:
(a) 50 ... 95 Teile eines Alkylacrylatesters, ausgewählt aus Isooctylacrylat, Isononylacrylat, Decylacrylat, Dodecylacrylat, Butylacrylat, Ethylhexylacrylat und Hexylacrylat;
(b) entsprechend 50 ... 5 Teile eines monoethylenisch ungesättigten, mäßig polaren, copolymerisierbaren Monomers, ausgewählt aus N-Vinylpyrrolidon, Hydroxyethylacrylat und Mischungen davon.

6. Entfernbarer, auftragsfähiger Haftklebstoff nach Anspruch 5, bei welchem das Acrylcopolymer umfaßt:
(a) 60 ... 80 Teile Isooctylacrylat und
(b) entsprechend 40 ... 20 Teile N-Vinylpyrrolidon.

7. Entfernbarer, auftragsfähiger Haftklebstoff nach Anspruch 5, bei welchem das Acrylcopolymer umfaßt:
(a) 60 ... 85 Teile Butylacrylat und
(b) entsprechend 40 ... 15 Teile N-Vinylpyrrolidon.

## Revendications

1. Adhésif thermodurcissable sensible à la pression, à enduire comprenant :
(a) au moins 30 % en poids d'un sirop monomère photopolymérisable d'un mélange de monomères, éventuellement avec un agent thixotropique ou d'un prépolymère desdits monomères, lesquels monomères comprennent :
(i) de 50 à 95 parties d'un monomère d'acrylate d'alkyle provenant d'un alcool non tertiaire comportant un groupe alkyle en C-4 à C-12, et
(ii) parallèlement, de 50 à 5 parties d'un monomère copolymérisable, modérément polaire, monoéthyléniquement insaturé, contenant de l'azote ;
(b) de 20 % à 60 % en poids d'une résine époxy ou d'un mélange de résines époxy ne contenant pas de groupes photopolymérisables,
(c) de 0,5 % à 10 % en poids d'un durcisseur activable à la chaleur pour la résine époxy,
(d) de 0,01 % à 5 % d'un photoinitiateur, et
(e) de 0 à 5 % d'un agent de photoréticulation.

2. Adhésif thermodurcissable sensible à la pression à enduire suivant la revendication 1, dans lequel la résine époxy est choisie parmi les résines époxy phénoliques, les résines époxy de bisphénol et les résines époxy de bisphénol halogénées.

3. Adhésif thermodurcissable sensible à la pression à enduire suivant l'une quelconque des revendications précédentes, dans lequel la résine époxy est l'éther diglycidylique de bisphénol-A.

4. Adhésif thermodurcissable sensible à la pression à enduire suivant l'une quelconque des revendications précédentes, dans lequel la résine époxy constitue de 25 % à 40 % de l'adhésif.

5. Adhésif thermodurcissable sensible à la pression à enduire suivant l'une quelconque des revendications précédentes, dans lequel le sirop monomère comprend :
(a) de 50 parties à 95 parties d'un ester d'acrylate d'alkyle choisi parmi l'acrylate d'isooctyle, l'acrylate d'isononyle, l'acrylate de décyle, l'acrylate de dodécyle, l'acrylate de butyle, l'acrylate d'éthylhexyle et l'acrylate d'hexyle,
(b) parallèlement, de 50 parties à 5 parties d'un monomère copolymérisable modérément polaire monoéthyléniquement insaturé choisi parmi la N-vinylpyrrolidone, l'acrylate d'hydroxyéthyle et leurs mélanges.

6. Adhésif sensible à la pression à enduire enlevable suivant la revendication 5, dans lequel le copolymère acrylique comprend :
(a) de 60 parties à 80 parties d'acrylate d'isooctyle, et
(b) parallèlement, de 40 parties à 20 parties de N-vinylpyrrolidone.

7. Adhésif sensible à la pression à enduire enlevable suivant la revendication 5, dans lequel le copolymère acrylique comprend :
(a) de 60 parties à 85 parties d'acrylate de butyle, et
(b) parallèlement, de 40 parties à 15 parties de N-vinylpyrrolidone.
